# EUROPÄISCHE PATENTANMELDUNG

(11) **EP 2 161 904 A1**
(43) Veröffentlichungstag der Anmeldung: **10.03.2010**
(21) Anmeldenummer: 09011492.7
(22) Anmeldetag: 08.09.2009
(51) Int. Cl.: H04L 29/08

(54) **Verfahren zur interaktiven Datenverarbeitung**

(30) Priorität: 08.09.2008 DE 102008046074
(71) Anmelder: Movilitas GmbH, 68167 Mannheim (DE)
(72) Erfinder: Lesche, Oliver, 68159 Mannheim (DE); Bernauer, Jörg, 68307 Mannheim (DE); Zamora Pueyo, Alberto, 85057 Ingolstadt (DE)
(74) Vertreter: Ullrich & Naumann

(57) **Zusammenfassung**

Ein Verfahren zur interaktiven Datenverarbeitung mittels mindestens eines mobilen Endgeräts (1) und eines zum Austausch von Daten mit dem mindestens einen Endgerät (1) geeigneten Serversystems (2) ist im Hinblick auf eine einfache Durchführbarkeit einer besonders großen Vielfalt unterschiedlicher Applikationen auf einem Endgerät (1) derart ausgestaltet und weitergebildet, dass für eine vorgebbare Applikation erforderliche Daten von dem Serversystem (2) applikationsspezifisch aufbereitet und zur Übertragung auf das mindestens eine Endgerät (1) zur Durchführung der Applikation bereitgestellt werden.

## Beschreibung

Die Erfindung betrifft ein Verfahren zur interaktiven Datenverarbeitung mittels mindestens eines mobilen Endgeräts und eines zum Austausch von Daten mit dem mindestens einen Endgerät geeigneten Serversystems.

Verfahren zur interaktiven Datenverarbeitung der eingangs genannten Art sind aus der Praxis bekannt. Meistens sind bei den bekannten Verfahren eine Vielzahl von Applikationen auf dem mobilen Endgerät durchführbar. Dabei ist häufig eine Synchronisationsschicht vorgesehen, über die das mobile Endgerät sporadisch Daten mit dem Serversystem austauschen kann.

Aufgrund der Vielfalt der unterschiedlichen möglichen Applikationen ist es üblich, alle für die verschiedenen Applikationen potentiell benötigten Daten auf das mobile Endgerät zu übertragen, um eine reibungslose Durchführung der Applikation auf dem mobilen Endgerät zu ermöglichen.

Bei den bekannten Verfahren ist es jedoch problematisch, dass für diese Sicherstellung der reibungslosen Durchführung unterschiedlicher Applikationen auf dem mobilen Endgerät große Datenvolumina übertragen werden müssen. Dies setzt zum einen eine hohe Speicherkapazität beim mobilen Endgerät voraus und verlangsamt gleichzeitig die Durchführung der Applikationen aufgrund der großen zu verwaltenden Datenvolumina. Diese Randbedingungen führen letztendlich zu einer Einschränkung der Vielfalt mit dem mobilen Endgerät durchführbarer Applikationen. Mit anderen Worten können häufig nicht sämtliche gewünschten Applikationen auf dem mobilen Endgerät durchgeführt werden.

Der vorliegenden Erfindung liegt daher die Aufgabe zugrunde, ein Verfahren zur interaktiven Datenverarbeitung der eingangs genannten Art derart auszugestalten und weiterzubilden, dass eine besonders große Vielfalt unterschiedlicher Applikationen auf einfache Weise auf einem mobilen Endgerät durchführbar ist.

Erfindungsgemäß wird die voranstehende Aufgabe durch ein Verfahren zur interaktiven Datenverarbeitung mit den Merkmalen des Patentanspruchs 1 gelöst.

Danach ist das Verfahren derart ausgestaltet und weitergebildet, dass für eine vorgebbare Applikation erforderliche Daten von dem Serversystem applikationsspezifisch aufbereitet und zur Übertragung auf das mindestens eine Endgerät zur Durchführung der Applikation bereitgestellt werden.

In erfindungsgemäßer Weise ist zunächst erkannt worden, dass zur Durchführung einzelner Applikationen auf dem mobilen Endgerät nicht grundsätzlich sämtliche für alle möglichen Applikationen potentiell benötigten Daten auf das Endgerät übertragen werden müssen. In weiter erfindungsgemäßer Weise findet hierzu im konkreten eine applikationsspezifische Aufbereitung von für eine vorgebbare Applikation erforderlichen Daten durch das Serversystem statt. Diese applikationsspezifisch aufbereiteten Daten werden dann zur Übertragung auf das mindestens eine Endgerät vom Serversystem bereitgestellt. Bei dem erfindungsgemäßen Verfahren wird also je nach gewünschter Applikation schon eine Vorauswahl und Aufbereitung der Daten durchgeführt, bevor diese dem Endgerät zur Durchführung der Applikation auf dem Endgerät zur Verfügung gestellt werden. Dies hat zur Folge, dass das Endgerät keine übermäßig hohe Speicherkapazität aufweisen und wesentlich weniger Daten handhaben muss, als dies beim herkömmlichen Fall erforderlich ist. Hierdurch wird zum einen die Geschwindigkeit bei der Durchführung der Applikation erhöht und zum anderen eine Einschränkung in der Vielfalt unterschiedlicher Applikationen vermieden. Auch datenintensive Applikationen lassen sich hierdurch auf dem mobilen Endgerät durchführen, da die gesamte Speicherkapazität des mobilen Endgeräts für die individuelle Applikation zur Verfügung steht und nicht von Daten anderer Applikationen belegt wird. Üblicherweise genügt daher die durch ein mobiles Endgerät grundsätzlich bereitgestellte Speicherkapazität für jede gewünschte Applikation.

Folglich ist mit dem erfindungsgemäßen Verfahren zur interaktiven Datenverarbeitung ein Verfahren bereitgestellt, bei dem eine besonders große Vielfalt unterschiedlicher Applikationen auf einfache Weise auf einem mobilen Endgerät durchführbar ist.

Bei einer konkreten Ausführung des Verfahrens könnten die aufbereiteten Daten von dem Serversystem auf das Endgerät übertragen werden. Hierzu könnte eine automatische Übertragung nach Fertigstellung der applikationsspezifischen Aufbereitung erfolgen. In bevorzugter Weise könnte die Übertragung der aufbereiteten Daten mittels einer Synchronisation zwischen Endgerät und Serversystem erfolgen. Synchronisationsintervalle können beliebig definiert werden.

In weiter vorteilhafter Weise könnten die aufbereiteten Daten einen Applikationsfluss definieren oder aufweisen. Mit anderen Worten könnten die Daten den Anwender des Endgeräts zur sukzessiven Durchführung von applikationsspezifischen Handlungen anleiten. Ein derartiger Applikationsfluss könnte beispielsweise ein sukzessives Beantworten von applikationsspezifischen Fragen umfassen. Das erfindungsgemäße Verfahren umfasst daher den Vorteil, dass statt einer getrennten Betrachtung der Applikation und der Daten ein vordefinierter Applikationsfluss auf das mobile Endgerät übertragen werden kann. Die aufbereiteten Daten könnten daher sowohl einen Applikationsfluss als auch die hierzu benötigten Datenobjekte aufweisen. Die Definition des Applikationsflusses und der benötigten Datenobjekte könnte dabei während der applikationsspezifischen Aufbereitung der für die vorgebbare Applikation erforderlichen Daten erfolgen. Diese Definition könnte daher erfolgen, bevor die aufbereiteten Daten auf das mobile Endgerät gelangen. Es könnte somit eine Einheit von Applikationsfluss und benötigter Datenobjekte erzeugt werden.

In weiter vorteilhafter Weise könnte die Durchführung der Applikation auf dem Endgerät offline bezüglich des Serversystems erfolgen. Mit anderen Worten ist zur Durchführung der Applikation auf dem Endgerät eine Online-Verbindung von dem Endgerät zu einem Serversystem nicht erforderlich. Hierdurch können Fehler aufgrund instabiler Online-Verbindungen von vornherein ausgeschlossen werden.

Bei dem erfindungsgemäßen Verfahren können mehrere mobile Endgeräte eingesetzt werden. Eine Übertragung der aufbereiteten Daten könnte vordefinierbar sein, so dass die Daten auf ein vorgebbares Endgerät übertragen werden könnten. Letztendlich könnte hierdurch vorgegeben werden, welcher Nutzer unter mehreren Nutzern die Applikation mit seinem jeweiligen Endgerät durchführen soll.

Im Hinblick auf eine sichere Rückkopplung von beispielsweise mit der Durchführung der Applikation erreichten Ergebnissen könnte nach der Durchführung der Applikation eine Rückmeldung vom Endgerät zum Serversystem erfolgen. In Abhängigkeit vom Inhalt der Rückmeldung können weitere Applikationen oder Handlungen erfolgen.

Bei einem konkreten Ausführungsbeispiel könnte die Applikation durch die Bearbeitung eines Tickets in Form eines Anfrage- und/oder Informationstickets gebildet werden. Hierbei könnte ein beliebig vorgebbarer Fragenkatalog abgearbeitet werden und/oder könnten Informationen an einen Nutzer übermittelt werden.

Bei einer weiteren beispielhaften Anwendung könnte die Applikation durch die Bearbeitung eines Störfalls mittels eines als Störfallticket vorliegenden Tickets gebildet werden. Hierdurch könnte eine Störfallbearbeitung auf dem mobilen Endgerät oder den mobilen Endgeräten erfolgen.

Im Hinblick auf eine besonders einfache Durchführung des Verfahrens könnte das Serversystem ein Ticket erkennen, das mittels eines mobilen Endgeräts bearbeitet werden kann. Geht folglich ein Ticket bei dem Serversystem in Form von beispielsweise einer Anfrage ein, so wird durch das Serversystem analysiert und dadurch erkannt, ob das eingehende Ticket mittels eines mobilen Endgeräts bearbeitet werden kann. Falls dies der Fall ist, könnte automatisch eine Weiterleitung applikationsspezifisch aufbereiteter Daten zu einem Endgerät erfolgen. Falls eine Bearbeitung mittels eines mobilen Endgeräts nicht möglich ist, könnte eine Rückmeldung zum Absender des Tickets erfolgen.

Im Hinblick auf eine einfache Datenkommunikation könnte das Ticket so aufbereitet werden, dass es über eine Standardschnittstelle eines Webservices an das Serversystem oder innerhalb des Serversystems übertragen werden kann. Hinsichtlich der konkreten Übertragungsstellen und Übertragungsvorgänge kann auf den jeweiligen Anwendungsfall abgestellt werden.

In weiterhin besonders einfacher Weise könnte das Ticket über eine Synchronisation mit dem Serversystem von dem Endgerät aufgenommen werden. Dabei können Zeitintervalle für eine automatische Synchronisation vorgegeben werden.

In analoger Weise könnte die Rückmeldung vom Endgerät zum Serversystem über eine Synchronisation erfolgen. Auch hier ist eine Vorgabe von Zeitintervallen für die Synchronisation möglich.

Das Endgerät könnte in besonders einfacher Weise ein Mobiltelefon sein. Eine individuelle Ausgestaltung des Endgeräts könnte hierdurch vermieden werden. Alternativ hierzu können auch handelsübliche PDAs oder auch jegliche andere zur Datenkommunikation geeignete Geräte als Endgerät verwendet werden.

Bei der konkreten Ausgestaltung des Serversystems können individuelle Erfordernisse berücksichtigt werden. Beispielsweise könnte die Aufbereitung und/oder Bereitstellung und/oder Übertragung der Daten mittels eines separaten Moduls in dem Serversystem erfolgen. Alternativ oder zusätzlich hierzu könnte die Erkennung und/oder Aufbereitung des Tickets mittels eines separaten Moduls in dem Serversystem erfolgen. Ein derartiges Modul könnte durch ein Computerprogrammprodukt oder eine Software gebildet sein.

Die obigen Module könnten an unterschiedlichen Orten betrieben werden, wobei eine geeignete Datenkommunikation zu ermöglichen ist. In besonders einfacher Weise könnte die Verbindung zwischen den oder mehreren Modulen über einen Webservice erfolgen.

Im Hinblick auf eine besondere individuelle Anwendung des Verfahrens könnte ein Modul oder könnten mehrere Module von einem Dienstleister gehostet werden. Hierdurch könnte die Zurverfügungstellung eines Moduls oder mehrerer Module von einem Dienstleister geregelt werden.

Zum besseren Verständnis des erfindungsgemäßen Verfahrens werden im Folgenden wesentliche Aspekte und Ausgestaltungen des Verfahrens erläutert:

Das erfindungsgemäße Verfahren könnte bei einem mobilen Störfallmanagement eingesetzt werden. Dabei könnte die Verteilung, Bearbeitung und Rückmeldung von Störfällen mittels Störfalltickets auf Mobiltelefone bzw. von Mobiltelefonen technischer Mitarbeiter erfolgen.

Bei dem Verfahren könnten in einem bereits existierenden Serversystem eines Unternehmens solche Störfalltickets nach ihrem Eingang im Serversystem erkannt werden, die relevant für ein mobiles Szenario sind. Die Tickets könnten dann so aufbereitet werden, dass sie über die Standardschnittstelle eines Webservices an ein individuell gestaltetes Modul übergeben werden können, wobei dieses Modul von einem Dienstleister gehostet werden könnte. Das Modul könnte die Störfalltickets weiter an das Mobiltelefon oder Endgerät des Zieltechnikers verteilen, wobei das Mobiltelefon oder Endgerät die Störfalltickets über eine Synchronisation abgreifen könnte. Ein technischer Mitarbeiter könnte den Störfall anhand der Informationen auf seinem Mobiltelefon bearbeiten und die Bearbeitung mittels des Mobiltelefons rückmelden. Diese Informationen könnten von dem Mobiltelefon an das Modul synchronisiert werden. Das Modul könnte die Daten für das Unternehmen bereitstellen. Über einen Webservice-Aufruf könnten diese aus dem Modul in das Serversystem des Unternehmens abgerufen werden. Dort können Sie als Rückmeldedaten zum Störfallticket verbucht werden.

Das Modul könnte auf dem Endgerät eine Umgebung zur Bearbeitung des Tickets in einem Offline-Modus bereitstellen. Alternativ oder zusätzlich hierzu könnte das Modul die Verantwortung für die Rücksynchronisation der bearbeiteten Daten vom Endgerät auf das Modul übernehmen und diese Daten zum Abruf durch das Serversystem des Unternehmens bereitstellen. Ein derartiger Abruf könnte über ein separates Modul erfolgen und die Auswertung der Daten ermöglichen.

Die Datenkommunikation zwischen dem Endgerät und dem Serversystem könnte über herkömmliche Verfahren wie beispielsweise GSM, GPRS, EDGE und UMTS erfolgen.

Als unterschiedliche Module könnten ein generischer Konnektor zum Aufruf des Webservices aus dem Serversystem des Unternehmens, ein Portalservice zum Darstellen und Auswerten der Aktivitäten, ein Modul zum applikationsspezifischen Aufbereiten und/oder Bereitstellen der Daten und ein Modul für die Verbindung der Endgeräte mit dem Serversystem des Unternehmens in Frage kommen.

Eine geeignete Firewall-Konfiguration zwischen den einzelnen Modulen ist wünschenswert. Ein Konnektor-Modul könnte Störfalltickets, die im Serversystem des Unternehmens erstellt werden, auf Relevanz für den mobilen Prozess selektieren und aufbereiten. Als Ergebnis könnte das Störfallticket in einer Form vorliegen, welche seine Weitergabe an geeignete Komponenten über den Aufruf eines Webservices ermöglicht.

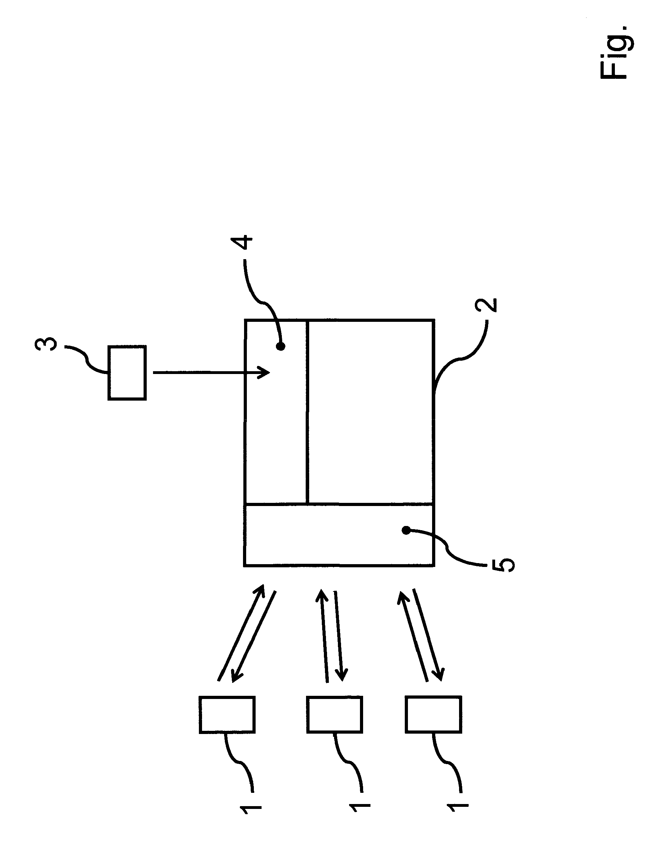

Letztlich ist mit dem erfindungsgemäßen Verfahren die Abbildung von Störfalltickets oder anderer Tickets auf Mobiltelefonen gemäß individueller Anforderungen möglich. Dabei ermöglicht ein derartiges Störfallticket die Abbildung eines flussgetriebenen mobilen Prozesses aus jeglichem Backend-Prozess heraus.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines Ausführungsbeispiels des erfindungsgemäßen Verfahrens anhand der Zeichnung zu verweisen. In Verbindung mit der Erläuterung des bevorzugten Ausführungsbeispiels des erfindungsgemäßen Verfahrens anhand der Zeichnung werden auch im Allgemeinen bevorzugte Ausgestaltungen und Weiterbildungen der Lehre erläutert. In der Zeichnung zeigt die einzige
- Fig.: ein Blockdiagramm zur Erläuterung eines Ausführungsbeispiels des erfindungsgemäßen Verfahrens zur interaktiven Datenverarbeitung.

Die einzige Fig. zeigt in einem Blockdiagramm den Ablauf eines Ausführungsbeispiels des erfindungsgemäßen Verfahrens zur interaktiven Datenverarbeitung mittels mindestens eines mobilen Endgeräts 1 und eines zum Austausch von Daten mit dem mindestens einen Endgerät 1 geeigneten Serversystems 2. Im Konkreten sind bei dem beispielhaften Verfahren drei Endgeräte 1 vorgesehen. Die Endgeräte 1 können mit dem Serversystem 2 Daten austauschen. Im Hinblick auf eine besonders große Vielfalt unterschiedlicher Applikationen, die auf einfache Weise auf mindestens einem der Endgeräte 1 durchführbar sind, ist das Verfahren derart ausgestaltet, dass für eine vorgebbare Applikation erforderliche Daten von dem Serversystem 2 applikationsspezifisch aufbereitet und zur Übertragung auf mindestens eines der drei Endgeräte 1 zur Durchführung der Applikation bereitgestellt werden.

Die Möglichkeit des Austauschs von Daten zwischen den Endgeräten 1 und dem Serversystem 2 ist durch die zwischen den Endgeräten 1 und dem Serversystem 2 eingezeichneten Pfeile angezeigt.

Die im Serversystem 2 aufbreiteten Daten können von dem Serversystem 2 auf das Endgerät 1 übertragen werden, wobei dies vorzugsweise mittels einer Synchronisation zwischen Endgerät 1 und Serversystem 2 erfolgt. Die Durchführung der Applikation auf dem Endgerät 1 erfolgt offline bezüglich des Serversystems 2, so dass eine Beeinträchtigung der Durchführung der Applikation aufgrund einer gestörten Kommunikation zwischen dem Endgerät 1 und dem Serversystem 2 während der Durchführung der Applikation vermieden ist.

Nach der Durchführung der Applikation erfolgt eine Rückmeldung vom jeweiligen Endgerät 1 zum Serversystem 2.

Bei dem hier gezeigten Ausführungsbeispiel wird die Applikation durch die Bearbeitung eines Tickets 3 gebildet, das beispielsweise ein Störfallticket ist. Das Serversystem 2 erkennt mittels eines separaten Moduls 4 ein Ticket 3, das mittels eines mobilen Endgeräts 1 bearbeitet werden kann. Das Ticket 3 wird im Modul 4 so aufbereitet, dass es über eine Standardschnittstelle eines Webservices an das Serversystem 2 oder innerhalb des Serversystems 2 übertragen werden kann.

Das Modul 4 kann von einem Dienstleister gehostet werden. Das Serversystem 2 weist des Weiteren noch ein Modul 5 zur Bereitstellung eines aufbereiteten Tickets 3 zur Übertragung an das Endgerät 1 auf.

Hinsichtlich weiterer vorteilhafter Ausgestaltungen des erfindungsgemäßen Verfahrens wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel des erfindungsgemäßen Verfahrens lediglich zur Erörterung der beanspruchten Lehre dient, diese jedoch nicht auf das Ausführungsbeispiel einschränkt.

### Bezugszeichenliste

- 1: Endgerät
- 2: Serversystem
- 3: Ticket
- 4: Modul
- 5: Modul

## Patentansprüche

1. Verfahren zur interaktiven Datenverarbeitung mittels mindestens eines mobilen Endgeräts (1) und eines zum Austausch von Daten mit dem mindestens einen Endgerät (1) geeigneten Serversystems (2),
**dadurch gekennzeichnet, dass** für eine vorgebbare Applikation erforderliche Daten von dem Serversystem (2) applikationsspezifisch aufbereitet und zur Übertragung auf das mindestens eine Endgerät (1) zur Durchführung der Applikation bereitgestellt werden.

2. Verfahren nach Anspruch 1, **dadurch gekennzeichnet, dass** die aufbereiteten Daten - vorzugsweise mittels einer Synchronisation - von dem Serversystem (2) auf das Endgerät (1) übertragen werden.

3. Verfahren nach Anspruch 1 oder 2, **dadurch gekennzeichnet, dass** die aufbereiteten Daten einen Applikationsfluss definieren oder aufweisen, wobei vorzugsweise der Applikationsfluss ein sukzessives Beantworten von applikationsspezifischen Fragen umfasst.

4. Verfahren nach einem der Ansprüche 1 bis 3, **dadurch gekennzeichnet, dass** die Durchführung der Applikation auf dem Endgerät (1) offline bezüglich des Serversystems (2) erfolgt.

5. Verfahren nach einem der Ansprüche 1 bis 4, **dadurch gekennzeichnet, dass** die Daten auf ein vorgebbares Endgerät (1) übertragen werden.

6. Verfahren nach einem der Ansprüche 1 bis 5, **dadurch gekennzeichnet, dass** nach der Durchführung der Applikation eine Rückmeldung vom Endgerät (1) zum Serversystem (2) erfolgt.

7. Verfahren nach einem der Ansprüche 1 bis 6, **dadurch gekennzeichnet, dass** die Applikation durch die Bearbeitung eines Tickets (3) in Form eines Anfrage- und/oder Informationstickets gebildet wird und/oder dass die Applikation durch die Bearbeitung eines Störfalls mittels eines als Störfallticket vorliegenden Tickets (3) gebildet wird.

8. Verfahren nach Anspruch 7, **dadurch gekennzeichnet, dass** das Serversystem (2) ein Ticket (3) erkennt, das mittels eines mobilen Endgeräts (1) bearbeitet werden kann.

9. Verfahren nach Anspruch 7 oder 8, **dadurch gekennzeichnet, dass** das Ticket (3) so aufbereitet wird, dass es über eine Standardschnittstelle eines Webservices an das Serversystem (2) oder innerhalb des Serversystems (2) übertragen werden kann.

10. Verfahren nach einem der Ansprüche 7 bis 9, **dadurch gekennzeichnet, dass** das Ticket (3) über eine Synchronisation mit dem Serversystem (2) von dem Endgerät (1) aufgenommen wird.

11. Verfahren nach einem der Ansprüche 6 bis 10, **dadurch gekennzeichnet, dass** die Rückmeldung vom Endgerät (1) zum Serversystem (2) über eine Synchronisation erfolgt.

12. Verfahren nach einem der Ansprüche 1 bis 11, **dadurch gekennzeichnet, dass** das Endgerät (1) ein Mobiltelefon ist.

13. Verfahren nach einem der Ansprüche 1 bis 12, **dadurch gekennzeichnet, dass** die Aufbereitung und/oder Bereitstellung und/oder Übertragung der Daten mittels eines separaten Moduls (4, 5) in dem Serversystem (2) erfolgt.

14. Verfahren nach einem der Ansprüche 7 bis 13, **dadurch gekennzeichnet, dass** die Erkennung und/oder Aufbereitung des Tickets (3) mittels eines separaten Moduls (4) in dem Serversystem (2) erfolgt.

15. Verfahren nach Anspruch 13 oder 14, **dadurch gekennzeichnet, dass** die Verbindung zwischen den oder mehreren Modulen (4, 5) über einen Webservice erfolgt und/oder dass ein Modul (4, 5) oder mehrere Module (4, 5) von einem Dienstleister gehostet werden.
